# EUROPEAN PATENT SPECIFICATION

(11) **EP 2 700 459 B1**
(45) Date of publication and mention of the grant of the patent: **02.10.2019**
(21) Application number: 12181126.9
(22) Date of filing: 21.08.2012
(51) Int. Cl.: B22F 3/105

(54) **Method for manufacturing a three-dimensional article**
Verfahren zur Herstellung eines dreidimensionalen Gegenstandes
Procédé de fabrication d'un article tridimensionnel

(43) Date of publication of application: 26.02.2014
(73) Proprietor: Ansaldo Energia IP UK Limited, London W1G 9DQ (GB)
(72) Inventor: Etter, Thomas, 5037 Muhen (CH); Schurb, Julius, 8006 Zürich (CH); Rickenbacher, Lukas Emanuel, 4053 Basel (CH); Künzler, Andreas, 5400 Baden (CH)
(74) Representative: Bernotti, Andrea

(56) References cited:
- WO-A1-02/07918
- WO-A1-2012/077072
- WO-A2-01/45882
- DE-C1- 10 039 143
- JP-A- 2008 133 497
- US-A- 5 496 682
- US-A1- 2011 293 840

## Description

### BACKGROUND OF THE INVENTION

The present invention relates to the technology of high-temperature resistant components, especially for gas turbines. It refers to a method for manufacturing a three-dimensional article.

### PRIOR ART

The mechanical properties of articles or components, which are for example used in the high temperature environment of gas turbines, and which are manufactured by a powder-based additive manufacturing process such as selective laser melting (SLM), show in the "as-built" condition a strong anisotropic behaviour.

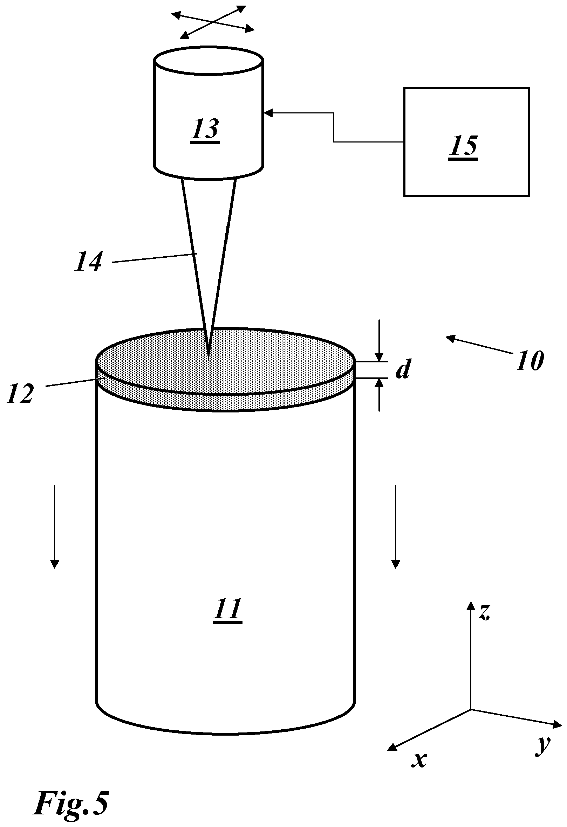

Fig. 5 shows a basic SLM arrangement 10, wherein a 3-dimensional article 11 is manufactured by successive addition of powder layers 12 of a predetermined layer thickness d, area and contour, which are then melted by means of a scanned laser beam 14 from a laser device 13 and controlled by a control unit 15.

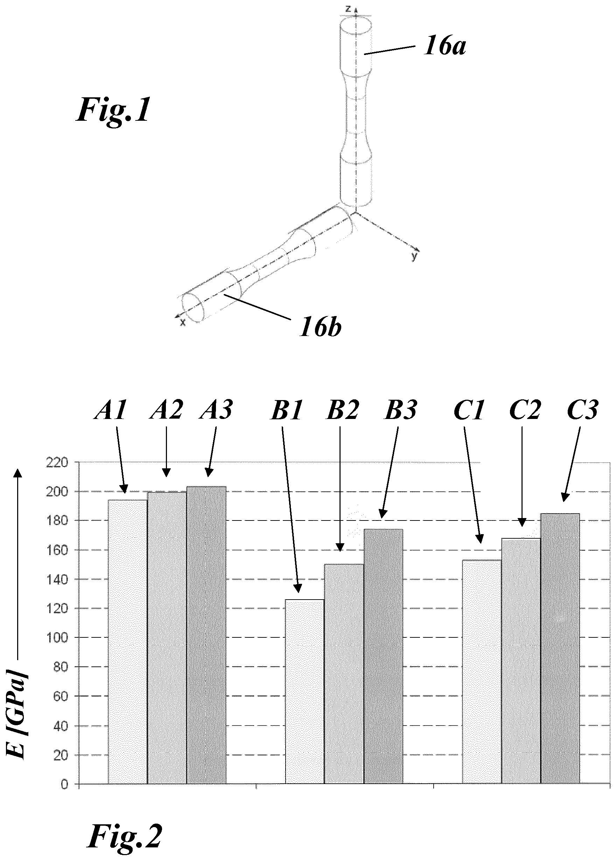

When - as shown in Fig. 5 - the powder layers 12 are added in z-direction, a first specimen 16a extending in z-direction (see Fig. 1) shows properties different from a second specimen 16b extending in the xy-plane.

Fig. 2 shows Young's modulus E at room temperature for three groups of specimen of identical nominal composition, namely A1-3, B1-3 and C1-3. The first group, A1-3, is related to a reference plate made by a non-additive manufacturing process. The second group, B1-3, is related to an SLM-processed specimen extending in the z-axis (like specimen 16a in Fig. 1). The third group, C1-3, is related to an SLM-processed specimen extending in the xy-plane (like specimen 16b in Fig. 1).

Now, the first specimen of each group (A1, B1 and C1) has been manufactured according to prior art procedures.

It can be easily seen that Young's modulus E shows a substantial anisotropy with a difference of more than 20 GPa between the z-axis specimen B1 and the xy-plane specimen C1, and is much lower (more than 50 GPa) for both specimen compared to the reference specimen A1.

The present invention assumes that an additional treatment may be necessary to reduce this anisotropy in the properties of an article made by an additive manufacturing process.

Document US 2012/000890 A1 discloses a method using laser metal forming (LMF) for repairing gas turbine blades which repairs a thickness-reduced portion of a blade tip of a gas turbine blade. The method comprises a thickness-reduced portion removing step of working a surface of the blade tip into a flat surface by removing the thickness-reduced portion of the blade tip, a build-up welding step of forming a built-up portion with a predetermined thickness by melting powder of a build-up material higher in ductility than a base material forming the gas turbine blade by a laser beam and building up the melted powder in multiple layers on the blade tip whose surface is worked into the flat surface, a forming step of working the built-up portion into the same shape as a shape that the blade tip originally has before suffering a thickness loss; and a heat-treatment step of removing a residual strain caused by laser welding in the build-up welding step.

Document WO 2012/016836 A1 teaches a method for manufacturing a component by selective laser melting (SLM) comprising: building a heat treatment device adapted to provide a heat treatment to the component as part of the same selective laser melting for manufacturing the component; and providing a heat treatment to the component by the heat treatment device. The heat treatment is used to make the component devoid of unwanted material property, for example, like ductility instead of embrittlement.

Document US 2011/293840 A1 describes a method for fabricating a direct metal deposition (DMD) structure made of To-6Al-4V where in addition a friction stir process is applied to the deposited Ti-6Al-4V DMD layer. The disclosed layerwise friction stirring of the DMD layers causes a mechanically heating and a plastically deformation of the metallic structure which results in recrystallization of each layer of deposited material during the built up of the article. Such a process is very time consuming because of the high number of layers for building up a three-dimensional article.

Document WO 01/45882 A2 describes a laser fabrication process (LENS) in conjunction with one or more metals containing reinforcement materials for direct fabrication of discontinuously reinforced metals matrix composites (MMC's). Articles of manufacture are formed in layers. A fine grain structure is achieved due to rapid cooling and further enhancements are described by subjecting the composite material to various post-treatments including a heat treatment in the range of 600-1100 °C. For example, according to table 1 in WO 01/45882 A2, speciments made of Ti-6Al-4V do not show a change in the tensile modulus in the as-deposited and the heat treated condition. This is because no recrystallization took place.

DE10039143 refers to a method for the production of precise components by means of laser sintering. In particular, DE10039143 refers to the production of precise components by laser sintering a powdered material consisting of iron powder and further powder alloying elements, which produce a powder alloy during the course of the sintering process. The disclosed method comprises also the steps of homogenizing, annealing, heat treating, degrading inner faults and/or improving the surface quality.

### SUMMARY OF THE INVENTION

It is an object of the present invention to disclose a method for manufacturing a three-dimensional article by additive manufacturing methods without the disadvantage of a having pronounced anisotropic properties.

This and other objects are obtained by a method according to claim 1.

The method according to the invention for manufacturing a three-dimensional article comprises the steps of
a) successively building up said article from a metallic base material, which is a high temperature Fe based or Ni based or Co based alloy, by means of an additive manufacturing process, said additive manufacturing process is one of selective laser melting (SLM), selective laser sintering (SLS) or electron beam melting (EBM), and that a metallic base material of powder form or in form of a suspension is used, thereby creating an article with a substantial anisotropy of its properties; and
b) heat treating said manufactured article, wherein said heat treatment consists of multiple steps, wherein at least one of said heat treatment steps is conducted at a temperature and at a hold time t such to recrystallize and/or grain coarse the base material (12), thereby creating an article (11) with a significantly reduced anisotropy each of said heat treatment consists of multiple steps, each representing a specific combination of heating rate, hold temperature, hold time and cooling rate, wherein at least one of said heat treatment steps is conducted at a sufficient high temperature and for a hold time long enough to partially or completely dissolve intermetallic phases, carbides or nitrides in the microstructure of said manufactured article (11), and wherein at least one of said heat treatment steps is conducted at a sufficient high temperature and for a hold time long enough to modify the volume fraction, size, shape and distribution of precipitations of any of metal-carbides, metal-nitrides or metal-carbonitrides, intermetallic phases or metal-borides.

The anisotropy of the properties of the three-dimensional article manufactured according to the disclosed method is reduced because of the recrystallisation of the microstructure and/or grain coarsening.

Specifically, said method comprises the steps of:
a) generating a three-dimensional model of said article followed by a slicing process to calculate the cross sections;
b) passing said calculated cross sections to a machine control unit (15) afterwards;
c) providing a powder of said base material, which is needed for the process;
d) preparing a powder layer (12) with a regular and uniform thickness on a substrate plate or on a previously processes powder layer;
e) performing melting by scanning with a energy beam (14) an area corresponding to a cross section of said articles according to the three-dimensional model stored in the control unit (15);
f) lowering the upper surface of the previously formed cross section by one layer thickness (d);
g) repeating said steps from c) to f) until reaching the last cross section according to the three-dimensional model; and
h) heat treating said three-dimensional article (11).

More specifically, the grain size distribution of said powder is adjusted to the layer thickness of said powder layer in order to establish a good flowability, which is required for preparing powder layers with regular and uniform thickness.

According to a further embodiment of the invention the powder grains have a spherical shape.

According to just another embodiment of the invention an exact grain size distribution of the powder is obtained by sieving and/or winnowing (air separation).

According to another embodiment of the invention said powder is provided by means of a powder metallurgical process, specifically one of gas or water atomization, plasma-rotating-electrode process or mechanical milling.

Specifically, said alloy can contain finely dispersed oxides, specifically one of Y₂O₃, AlO₃, ThO₂, HfO₂, ZrO₂.

According to a further embodiment of the invention said heat treatment is used to reduce the anisotropy of Young's modulus.

According to another embodiment of the invention said heat treatment is a combination of different individual heat treatments.

Specifically, at least one of said heat treatment steps is conducted at a sufficient high temperature and for a hold time long enough to precipitate metal-carbides, metal-nitrides or metal-carbonitrides, specifically one of M(C, N), M₆C, M₇C₃ or M₂₃C₆.

Specifically, at least one of said heat treatment steps is conducted at a sufficient high temperature and for a hold time long enough to precipitate intermetallic phases, specifically one Ni₃(Al, Ti) known as gamma-prime, or Ni₃(Nb, Al, Ti), known as gamma-double-prime, or Ni₃Nb known as delta-phase.

Specifically, at least one of said heat treatment steps is conducted at a sufficient high temperature and for a hold time long enough to precipitate metal-borides, specifically M₃B₂, to improve grain boundary strength.

Specifically, at least one of said heat treatment steps can be conducted additionally under hot isostatic pressing (HIP) conditions, to further improve the microstructure.

According to another embodiment of the invention only part of said manufactured article is subjected to said heat treatment.

According to another embodiment of the invention before and/or after said heat treatment, individual heat treatments or heat treatment steps, respectively, said manufactured articles are subjected to additional processing steps, specifically one of machining, welding or brazing.

### BRIEF DESCRIPTION OF THE DRAWINGS

The present invention is now to be explained more closely by means of different embodiments and with reference to the attached drawings.
- Fig. 1: shows the different orientation of two specimen made by an additive manufacturing process like SLM;
- Fig. 2: shows values of Young's modulus at room temperature for three groups of specimen made of Hastelloy® X with and without heat treatment;
- Fig. 3: shows values of Young's modulus at 750°C for three groups of specimen made of Hastelloy® X with and without heat treatment;
- Fig. 4: shows photographs of the microstructure in two different magnifications (100µm and 50µm) for three different specimen made of Hastelloy® X without and with heat treatment; and
- Fig. 5: shows a basic arrangement for SLM manufacturing, which may be used in the present invention.

### DETAILED DESCRIPTION OF DIFFERENT EMBODIMENTS OF THE INVENTION

One drawback of powder-based additive manufacturing technology can be the strong anisotropy of material properties resulting from the layer-wise build-up process.

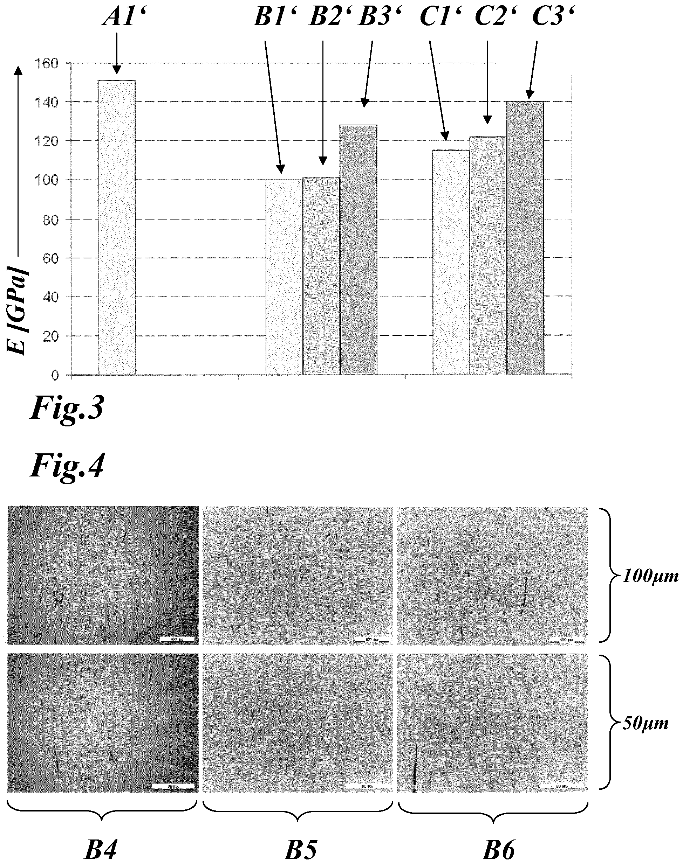

The Young's modulus (E in Fig. 2 and 3) is significantly lower along the z-axis (z-specimen (B1-B3 in Fig. 2 and B1'-B3' in Fig. 3) compared to xy-specimens (C1-C3 in Fig. 2 and C1'-C3' in Fig. 3), for instance. The z-axis is parallel to the build direction (see Fig. 1 and 5).

However, appropriate "post-built" heat treatments can reduce the anisotropy significantly, as it has been shown by mechanical testing of SLM specimens made of Hastelloy® X. It is important to note that the reduction of anisotropy already occurs at heat treatment temperatures typical for the corresponding wrought products made of same alloy (in Fig. 2, specimen A2, B2 and C2 have been heat treated for 0.5h at 1125°C, and specimen A3, B3 and C3 have been heat treated for 2h at 1190°C, while specimen A1, B1 and C1 have experienced no heat treatment at all; in Fig. 3, specimen A1', B1' and C1' are without heat treatment, while specimen B2' and C2' were held for 0.5h at 1125°C, and specimen B3' and C3' were held for 2h at 1190°C).

Especially, the present invention relates to the heat treatment of articles/components made of Ni/Co/Fe-based superalloys produced by a powder-based additive manufacturing technology, such as selective laser melting SLM or laser metal forming LMF. These articles have different microstructures compared to conventionally cast material or wrought products of the same alloy (specimen A1-A3 in Fig. 2 and A1' in Fig. 3), for instance.

This is primarily due to powder-based article production and the inherent high cooling rates of the energy beam-material interaction in these processes. As a consequence, the material is very homogeneous with respect to chemical composition and principally free of segregations. In addition, the material in the "as built" condition has a very fine microstructure (e.g. precipitates and grain size), much finer compared to conventionally cast or wrought superalloys.

As has been recognized before, Ni/Co/Fe-based superalloys produced by powder-based additive manufacturing technologies are generally free of residual eutectic contents and heat treatments can be realized at higher temperatures compared to conventionally cast components of same composition. This allows an adjustment of the microstructure over a wide range, including grain size and precipitation optimization, leading to improved material properties.

The present invention disclosure relates to specially adjusted heat treatments for Ni/Co/Fe based superalloys processed by powder-based additive manufacturing technology to reduce inherent anisotropy of this technology.

This invention disclosure is based on the discovery that anisotropic material behaviour can be reduced by appropriate heat treatments.

These specific small-grained anisotropic microstructures result primarily from powder-based and layer-wise article production as well as the characteristic high thermal gradients occurring at energy beam-material interactions. Furthermore, high thermal gradients lead to residual stresses, which can favour recrystallisation and/or grain coarsening during heat treatment.

Therefore, this invention disclosure includes the manufacturing of three-dimensional articles specifically made of a Ni/Co/Fe based superalloy by powder-based additive manufacturing technologies (selective laser melting (SLM), selective laser sintering (SLS), electron beam melting (EBM)) followed by a specially adapted heat treatment resulting in reduced anisotropic material behaviour.

Said powder-based additive manufacturing technology may be used to build up an article, such as a blade or vane of a gas turbine, entirely or partly, e.g. blade crown build up.

The method of manufacturing the three-dimensional articles according to the invention comprises the following steps:
a) generating a three-dimensional model followed by a slicing process to calculate the cross sections, which are passed to a machine control unit (15 in Fig. 5) afterwards;
b) preparing the powders of said Ni/Co/Fe based alloy, which are needed for the process;
c) preparing a powder layer 12 with a regular and uniform thickness d on a substrate plate or on a previously processed powder layer;
d) performing melting by scanning with a energy beam (e.g. laser beam 14) corresponding to a cross section of said articles according to the three-dimensional model stored in the control unit;
e) lowering the upper surface of the previously formed cross section by one layer thickness d (see vertical arrows in Fig. 5);
f) repeating said steps from c) to e) until reaching the last cross section according to the three-dimensional model; and
g) heat treating said three-dimensional article 11.

Preferably, the grain size distribution of the powder used in this process is adjusted to the layer thickness d to have to a good flowability, which is required for preparing powder layers with regular and uniform thickness d.

Preferably, the powder grains of the powder used in this process have a spherical shape. The exact grain size distribution of the powder may be obtained by sieving and/or winnowing (air separation). Furthermore, the powder may be obtained by gas or water atomization, plasma-rotating-electrode process, mechanical milling and like powder metallurgical processes.

In other cases, a suspension may be used instead of powder.

When said high temperature material is a Ni-based alloy, a plurality of commercially available alloys may be used like Waspaloy®, Hastelloy® X, IN617®, IN718®, IN625®, Mar-M247®, IN100®, IN738®, 1N792®, Mar-M200®, B1900®, RENE 80®, Alloy 713®, Haynes 230®, Haynes 282®, or other derivatives.

When said high temperature material is a Co-based alloy, a plurality of commercially available alloys may be used like FSX 414®, X-40®, X-45®, MAR-M 509® or MAR-M 302®.

When said high temperature material is a Fe-based alloy, a plurality of commercially available alloys may be used like A 286®, Alloy 800 H®, N 155®, S 590®, Alloy 802®, Incoloy MA 956®, Incoloy MA 957® or PM 2000®.

Especially, these alloys may contain fine dispersed oxides such as Y₂O₃, AlO₃, ThO₂, HfO₂, ZrO₂.

The heat treatment according to the invention advantageously reduces anisotropic material behaviour, especially the Young's modulus E (see Fig. 2 and 3). For a specimen made of Hastelloy® X, the Young's modulus E at room temperature (Fig. 2) increases for a specimen extending in z-direction (B1, B2, B3 in Fig. 2) from B1 (no heat treatment HT) to B2 (0.5h at 1125°C) to B3 (2h at 1190°C). For a specimen extending in the xy-plane (C1, C2, C3 in Fig. 2) there is an analogous increase from C1 (no heat treatment) to C2 (0.5h at 1125°C) to C3 (2h at 1190°C). For each of the three procedures (no HT, 0.5h at 1125°C and 2h at 1190°C) the Young's modulus E is lowest for the z-direction specimen, higher for the xy-plane specimen, and highest for the reference specimen (A1-A3). However, the differences in E between the various specimens are smallest for the most powerful heat treatment at 1190°C for 2h (A3, B3, C3 in Fig. 2). The same is true for the equivalent values of Young's modulus at 750°C, as shown in Fig. 3.

The heat treatment according to the invention is done by means of independent equipment. The heat treatment improves specific material properties by optimizing the microstructure of the article. Fig. 4 shows photographs of the microstructure in two different magnifications (100µm and 50µm) for three different z-direction specimen B4, B5 and B6 made of Hastelloy® X after having been tensile-tested, with and without heat treatment, whereby specimen B4 had no heat treatment with a tensile test conducted at 750°C, specimen B5 had a heat treatment for 0.5h at 1125°C with a tensile test conducted at room temperature, and specimen B6 had a heat treatment for 2h at 1190°C with a tensile test conducted at room temperature.

In certain cases, the whole article may be subjected to said heat treatment. In other cases, only part of it may be subjected to said heat treatment.

Said heat treatment can be one-time treatment. However, it can be a combination of different individual heat treatments.

Furthermore, said heat treatment may consist of multiple steps, each representing a specific combination of heating rate, hold temperature, hold time and cooling rate. In such a case, before or after each heat treatment step the three-dimensional articles may be subject to different processing steps such as, but not limited to, machining, welding or brazing, especially in order to use the specific advantages of the specific microstructure, e.g. small grains, which are beneficial for welding.

Preferably, at least one of said heat treatment steps should be conducted at a sufficient high temperature and for a hold time long enough to partially or completely dissolve constituents in said microstructure such as intermetallic phases, carbides or nitrides. Furthermore, it is clear that at least one of said heat treatment steps is conducted at a sufficient high temperature and for a hold time long enough to recrystallise and/or coarsen the grains.

As can be seen in Fig. 2 and 3 (comparing A3, B3 and C3 or A1', B3' and C3'), said recrystallization and/or grain coarsening induced by the described heat treatment results in microstructures comparable to wrought and conventionally cast products.

In addition, at least one of said heat treatment steps may be conducted at a sufficient high temperature and for a hold time long enough to precipitate metal-carbides, metal-nitrides or metal-carbonitrides such as but not limited to, M(C, N), M₆C, M₇C₃ or M₂₃C₆.

In addition, at least one of said heat treatment steps may be conducted at a sufficient high temperature and for a hold time long enough to precipitate intermetallic phases such as, but not limited to, Ni₃(Al, Ti) known as gamma-prime, or Ni₃(Nb, Al, Ti), known as gamma-double-prime, or Ni₃Nb known as delta-phase.

In addition, at least one of said heat treatment steps is conducted at a sufficient high temperature and for a hold time long enough to precipitate metal-borides such as, but not limited to, M₃B₂, to improve grain boundary strength.

Furthermore, at least one of said heat treatment steps is conducted at a sufficient high temperature and for a hold time long enough to modify the volume fraction, size, shape and distribution of said precipitations mentioned before.

Finally, at least one of said heat treatment steps can be conducted additionally under isostatic pressure, known as hot isostatic pressing HIP, to further improve the microstructure.

### Summary:

Mechanical testing and microstructural assessment have shown that specimens built by the SLM process or by other additive manufacturing process have strong anisotropic behaviour. By appropriate heat treatments, the anisotropic material behaviour, such as the Young's modulus, can be reduced significantly, resulting in more isotropic material properties.

### LIST OF REFERENCE NUMERALS

- 10: SLM arrangement
- 11: article (3D)
- 12: powder layer
- 13: laser device
- 14: laser beam
- 15: control unit
- 16a: z-specimen
- 16b: xy-specimen
- A1-3, A1': reference plate
- B1-3, B1'-3': z-specimen
- C1-3, C1'-3': xy-specimen
- d: layer thickness (powder layer)

## Claims

1. Method for manufacturing a three-dimensional article (11), comprising the steps of
a) successively building up said article (11) from a metallic base material (12), which is a high temperature Fe based or Ni based or Co based alloy, by means of an additive manufacturing process, said additive manufacturing process is one of selective laser melting (SLM), selective laser sintering (SLS) or electron beam melting (EBM), and a metallic base material (12) of powder form or in form of a suspension is used, thereby creating an article (11) with a substantial anisotropy of its properties; and
b) heat treating said manufactured article (11), wherein said heat treatment consists of multiple steps, wherein at least one of said heat treatment steps is conducted at a temperature and at a hold time t such to recrystallize and/or grain coarse the base material (12), thereby creating an article (11) with a significantly reduced anisotropy, each of said heat treatment multiple steps representing a specific combination of heating rate, hold temperature, hold time and cooling rate, wherein at least one of said heat treatment steps is conducted at a sufficient high temperature and for a hold time long enough to partially or completely dissolve intermetallic phases, carbides or nitrides in the microstructure of said manufactured article (11), and wherein at least one of said heat treatment steps is conducted at a sufficient high temperature and for a hold time long enough to modify the volume fraction, size, shape and distribution of precipitations of any of metal-carbides, metal-nitrides or metal-carbonitrides, intermetallic phases or metal-borides.

2. Method according to claim 1, **characterized in that** said method comprises the steps of:
a) generating a three-dimensional model of said article followed by a slicing process to calculate the cross sections;
b) passing said calculated cross sections to a machine control unit (15) afterwards;
c) providing a powder of said base material, which is needed for the process;
d) preparing a powder layer (12) with a regular and uniform thickness on a substrate plate or on a previously processed powder layer;
e) performing melting by scanning with a energy beam (14) an area corresponding to a cross section of said articles according to the three-dimensional model stored in the control unit (15);
f) lowering the upper surface of the previously formed cross section by one layer thickness (d);
g) repeating said steps from c) to f) until reaching the last cross section according to the three-dimensional model; and
h) heat treating said three-dimensional article (11).

3. Method according to claim 2, **characterized in that** the grain size distribution of said powder is adjusted to the layer thickness (d) of said powder layer (12) in order to establish a good flowability, which is required for preparing powder layers (12) with regular and uniform thickness (d).

4. Method according to one of the claims 1-3, **characterized in that** the powder grains have a spherical shape.

5. Method according to one of the claims 1-4 **characterized in that** an exact grain size distribution of the powder is obtained by sieving and/or winnowing.

6. Method according to claim 1, **characterized in that** said powder is provided by means of a powder metallurgical process, specifically one of gas or water atomization, plasma-rotating-electrode process or mechanical milling.

7. Method according to one of the claims 1-6, **characterized in that** said alloy contain finely dispersed oxides, specifically one of Y₂O₃, AlO₃, ThO₂, HfO₂, ZrO₂.

8. Method according to one of the claims 1-7, **characterized in that** said heat treatment is used to reduce the anisotropy of Young's modulus.

9. Method according to one of the claims 1-8, **characterized in that** said heat treatment is a combination of different individual heat treatments.

10. Method according to any of the preceding claims, **characterized in that** at least one of said heat treatment steps is conducted at a sufficient high temperature and for a hold time long enough to precipitate metal-carbides, metal-nitrides or metal-carbonitrides, one of M(C, N), M₆C, M₇C₃ or M₂₃C₆.

11. Method according to any of the preceding claims, **characterized in that** at least one of said heat treatment steps is conducted at a sufficient high temperature and for a hold time long enough to precipitate intermetallic phases, one of Ni₃(Al, Ti), or Ni₃(Nb, Al, Ti), or Ni₃Nb.

12. Method according to any of the preceding claims, **characterized in that** at least one of said heat treatment steps is conducted at a sufficient high temperature and for a hold time long enough to precipitate metal-borides, M₃B₂, to improve grain boundary strength.

13. Method according to any of the preceding claims, **characterized in that** at least one of said heat treatment steps can be conducted additionally under hot isostatic pressing (HIP) conditions, to further improve the microstructure.

14. Method according to one of the claims 1-13, **characterized in that** only part of said manufactured article (11) is subjected to said heat treatment.

15. Method according to one of the claims 1-14, **characterized in that** before and/or after said heat treatment, individual heat treatments or heat treatment steps, respectively, said manufactured articles (11) are subjected to additional processing steps, specifically one of machining, welding or brazing.

## Patentansprüche

1. Verfahren zur Herstellung eines dreidimensionalen Gegenstands (11), die Schritte umfassend:
a) schrittweises Aufbauen des Gegenstands (11) aus einem metallischen Grundmaterial (12), das eine Hochtemperaturlegierung auf Fe-Basis oder Ni-Basis oder Co-Basis ist, mittels eines additiven Herstellungsprozesses, wobei der additive Herstellungsprozess entweder selektives Laserschmelzen (SLM), selektives Lasersintern (SLS) oder Elektronenstrahlschmelzen (EBM) ist, und wobei ein metallisches Grundmaterial (12) in Pulverform oder in Form einer Suspension verwendet wird, wodurch ein Gegenstand (11) mit einer beträchtlichen Anisotropie seiner Eigenschaften erzeugt wird; und
b) Wärmebehandeln des hergestellten Gegenstands (11), wobei die Wärmebehandlung mehrere Schritten umfasst, wobei wenigstens einer der Wärmebehandlungsschritte bei einer Temperatur und mit einer Haltezeit t durchgeführt wird, so dass das Grundmaterial (12) rekristallisiert und/oder grobkörnig wird, wodurch ein Gegenstand (11) mit einer deutlich reduzierten Anisotropie erzeugt wird, wobei jeder der mehreren Schritte der Wärmebehandlung eine spezifische Kombination von Erwärmungsrate, Haltetemperatur, Haltezeit und Abkühlungsrate aufweist, wobei wenigstens einer der Wärmebehandlungsschritte bei einer ausreichend hohen Temperatur und für eine Haltezeit durchgeführt wird, die lang genug ist, um intermetallische Phasen, Carbide oder Nitride in der Mikrostruktur des hergestellten Gegenstands (11) teilweise oder vollständig aufzulösen, und wobei wenigstens einer der Wärmebehandlungsschritte bei einer ausreichend hohen Temperatur und für eine Haltezeit durchgeführt wird, die lang genug ist, um den Volumenanteil, die Größe, die Form und die Verteilung von Ausscheidungen von Metallcarbiden, Metallnitriden oder Metallcarbonitriden, intermetallischen Phasen oder Metallboriden zu modifizieren.

2. Verfahren nach Anspruch 1, **dadurch gekennzeichnet, dass** das Verfahren die Schritte umfasst:
a) Erzeugen eines dreidimensionalen Modells des Gegenstands, gefolgt von einem Slicing-Prozess zum Berechnen der Querschnitte;
b) anschließendes Weiterleiten der berechneten Querschnitte an eine Maschinensteuereinheit (15);
c) Bereitstellen eines Pulvers des Basismaterials, das für den Prozess benötigt wird;
d) Herstellen einer Pulverschicht (12) mit einer planmäßigen und gleichmäßigen Dicke auf einer Substratplatte oder auf einer zuvor bearbeiteten Pulverschicht;
e) Durchführen eines Schmelzens durch Abtasten einer Fläche, die einem Querschnitt des Gegenstands gemäß dem in der Steuereinheit (15) gespeicherten dreidimensionalen Modell entspricht mit einem Energiestrahl (14);
f) Absenken der Oberseite des zuvor ausgebildeten Querschnitts um eine Schichtdicke (d);
g) Wiederholen der Schritte von c) bis f) bis zum Erreichen des letzten Querschnitts gemäß dem dreidimensionalen Modell; und
h) Wärmebehandeln des dreidimensionalen Gegenstandes (11).

3. Verfahren nach Anspruch 2, **dadurch gekennzeichnet, dass** die Korngrößenverteilung des Pulvers an die Schichtdicke (d) der Pulverschicht (12) angepasst wird, um eine gute Fließfähigkeit zu erreichen, die zur Herstellung von Pulverschichten (12) mit planmäßiger und gleichmäßiger Dicke (d) erforderlich ist.

4. Verfahren nach einem der Ansprüche 1 bis 3, **dadurch gekennzeichnet, dass** die Pulverkörner eine Kugelform aufweisen.

5. Verfahren nach einem der Ansprüche 1 bis 4, **dadurch gekennzeichnet, dass** eine genaue Korngrößenverteilung des Pulvers durch Sieben und/oder Aussortieren erhalten wird.

6. Verfahren nach Anspruch 1, **dadurch gekennzeichnet, dass** das Pulver mittels eines pulvermetallurgischen Prozesses, insbesondere einer Gas- oder Wasserzerstäubung, eines Plasma-Drehelektroden-Prozesses oder eines mechanischen Fräsens bereitgestellt wird.

7. Verfahren nach einem der Ansprüche 1 bis 6, **dadurch gekennzeichnet, dass** die Legierung fein verteilte Oxide enthält, insbesondere eines von Y₂O₃, AlO₃, ThO₂, HfO₂, ZrO₂.

8. Verfahren nach einem der Ansprüche 1 bis 7, **dadurch gekennzeichnet, dass** die Wärmebehandlung verwendet wird, um die Anisotropie des Elastizitätsmoduls zu reduzieren.

9. Verfahren nach einem der Ansprüche 1 bis 8, **dadurch gekennzeichnet, dass** die Wärmebehandlung eine Kombination aus verschiedenen individuellen Wärmebehandlungen ist.

10. Verfahren nach einem der vorangehenden Ansprüche, **dadurch gekennzeichnet, dass** wenigstens einer der Wärmebehandlungsschritte bei einer ausreichend hohen Temperatur und für eine Haltezeit durchgeführt wird, die lang genug ist, um Metallcarbide, Metallnitride oder Metallcarbonitride, eines von M(C, N), M₆C, M₇C₃ oder M₂₃C₆ auszuscheiden.

11. Verfahren nach einem der vorangehenden Ansprüche, **dadurch gekennzeichnet, dass** wenigstens einer der Wärmebehandlungsschritte bei einer ausreichend hohen Temperatur und für eine Haltezeit durchgeführt wird, die lang genug ist, um intermetallische Phasen, eine von Ni₃(Al, Ti) oder Ni₃(Nb, Al, Ti) oder Ni₃Nb auszuscheiden.

12. Verfahren nach einem der vorangehenden Ansprüche, **dadurch gekennzeichnet, dass** wenigstens einer der Wärmebehandlungsschritte bei einer ausreichend hohen Temperatur und für eine Haltezeit durchgeführt wird, die lang genug ist, um Metallboride, M₃B₂, auszuscheiden, um die Korngrenzenfestigkeit zu verbessern.

13. Verfahren nach einem der vorangehenden Ansprüche, **dadurch gekennzeichnet, dass** wenigstens einer der Wärmebehandlungsschritte zusätzlich unter isostatischen Heißpressbedingungen (HIP-Bedingungen) durchgeführt werden kann, um die Mikrostruktur weiter zu verbessern.

14. Verfahren nach einem der Ansprüche 1 bis 13, **dadurch gekennzeichnet, dass** nur ein Teil des hergestellten Gegenstandes (11) der Wärmebehandlung unterzogen wird.

15. Verfahren nach einem der Ansprüche 1 bis 14, **dadurch gekennzeichnet, dass** vor und/oder nach der Wärmebehandlung, einzelnen Wärmebehandlungen bzw. Wärmebehandlungsschritten die hergestellten Gegenstände (11) zusätzlichen Verarbeitungsschritten, insbesondere dem mechanischen Bearbeiten, Schweißen oder Löten, unterzogen werden.

## Revendications

1. Procédé de fabrication d'un article en trois dimensions (11), comprenant les étapes consistant à
a) accumuler successivement ledit article (11) à partir d'un matériau de base métallique (12), qui est un alliage à base de Fe ou à base de Ni ou à base de Co à haute température, à l'aide d'un procédé de fabrication additif, ledit procédé de fabrication additif étant l'un d'une fusion sélective par laser (SLM), d'un frittage sélectif par laser (SLS) ou d'une fusion par faisceau d'électrons (EBM), et un matériau de base métallique (12) sous forme de poudre ou sous forme d'une suspension étant utilisé, afin de créer un article (11) avec une anisotropie substantielle de ses propriétés ; et
b) traiter thermiquement ledit article fabriqué (11), dans lequel ledit traitement thermique consiste en plusieurs étapes, dans lequel au moins l'une desdites étapes de traitement thermique est réalisée à une température et avec un temps de maintien t de façon à recristalliser et/ou grossir le grain du matériau de base (12), de façon à créer un article (11) qui présente une anisotropie considérablement réduite, chacune desdites étapes de traitement thermique représentant une combinaison spécifique d'une vitesse de chauffage, d'une température de maintien, d'un temps de maintien et d'une vitesse de refroidissement, dans lequel au moins l'une desdites étapes de traitement thermique est réalisée à une température suffisamment élevée et pendant un temps de maintien suffisamment long pour dissoudre partiellement ou complètement les phases intermétalliques, les carbures ou les nitrures au sein de la microstructure dudit article fabriqué (11), et dans lequel au moins l'une desdites étapes de traitement thermique est réalisée à une température suffisamment élevée et pendant un temps de maintien suffisamment long pour modifier la fraction de volume, la taille, la forme et la répartition des précipitations d'un quelconque des carbures de métal, des nitrures de métal ou des carbonitrures de métal, des phases intermétalliques ou des borures de métal.

2. Procédé selon la revendication 1, **caractérisé en ce que** ledit procédé comprend les étapes consistant à :
a) générer un modèle en trois dimensions dudit article suivi par un procédé de découpage afin de calculer les sections transversales ;
b) transmettre ensuite lesdites sections transversales calculées à une unité de commande de machine (15) ;
c) fournir une poudre dudit matériau de base, qui est nécessaire au procédé ;
d) préparer une couche de poudre (12) avec une épaisseur régulière et uniforme sur une plaque de substrat ou sur une couche de poudre préalablement traitée ;
e) effectuer une fusion en balayant avec un faisceau d'énergie (14) une zone qui correspond à une section transversale desdits articles selon le modèle en trois dimensions stocké dans l'unité de commande (15) ;
f) abaisser la surface supérieure de la section transversale préalablement formée d'une épaisseur de couche (d) ;
g) répéter lesdites étapes c) à f) jusqu'à atteindre la dernière section transversale selon le modèle en trois dimensions ; et
h) traiter thermiquement ledit article en trois dimensions (11).

3. Procédé selon la revendication 2, **caractérisé en ce que** la granulométrie de ladite poudre est ajustée selon l'épaisseur de couche (d) de ladite couche de poudre (12) afin d'établir une bonne fluidité, qui est nécessaire pour préparer des couches de poudre (12) avec une épaisseur régulière et uniforme (d).

4. Procédé selon l'une des revendications 1 à 3, **caractérisé en ce que** les grains de poudre possèdent une forme sphérique.

5. Procédé selon l'une des revendications 1 à 4, **caractérisé en ce qu'**une granulométrie exacte de la poudre est obtenue par tamisage et/ou séparation.

6. Procédé selon la revendication 1, **caractérisé en ce que** ladite poudre est fournie à l'aide d'un procédé métallurgique de poudre, et plus spécifiquement l'un d'une atomisation par gaz ou par eau, d'un procédé à électrode rotative à plasma, ou d'un fraisage mécanique.

7. Procédé selon l'une des revendications 1 à 6, **caractérisé en ce que** ledit alliage contient des oxydes finement dispersés, et plus spécifiquement l'un de Y₂O₃, AlO₃, ThO₂, HfO₂, ZrO₂.

8. Procédé selon l'une des revendications 1 à 7, **caractérisé en ce que** ledit traitement thermique est utilisé pour réduire l'anisotropie du module de Young.

9. Procédé selon l'une des revendications 1 à 8, **caractérisé en ce que** ledit traitement thermique est une combinaison de différents traitements thermiques individuels.

10. Procédé selon l'une quelconque des revendications précédentes, **caractérisé en ce qu'**au moins l'une desdites étapes de traitement thermique est réalisée à une température suffisamment élevée et pendant un temps de maintien suffisamment long pour précipiter les carbures de métal, les nitrures de métal ou les carbonitrures de métal, l'un de M(C, N), M₆C, M₇C₃ ou M₂₃C₆.

11. Procédé selon l'une quelconque des revendications précédentes, **caractérisé en ce qu'**au moins l'une desdites étapes de traitement thermique est réalisée à une température suffisamment élevée et pendant un temps de maintien suffisamment long pour précipiter les phases intermétalliques, l'un de Ni₃(Al, Ti), ou Ni₃(Nb, Al, Ti), ou Ni₃Nb.

12. Procédé selon l'une quelconque des revendications précédentes, **caractérisé en ce qu'**au moins l'une desdites étapes de traitement thermique est réalisée à une température suffisamment élevée et pendant un temps de maintien suffisamment long pour précipiter les borures de métal, M₃B₂, afin d'améliorer la résistance de limite de grain.

13. Procédé selon l'une quelconque des revendications précédentes, **caractérisé en ce qu'**au moins l'une desdites étapes de traitement thermique peut être réalisée en outre dans des conditions de pression isostatique à chaud (HIP), afin d'améliorer davantage la microstructure.

14. Procédé selon l'une des revendications 1 à 13, **caractérisé en ce que** seule une partie desdits articles fabriqués (11) est soumise audit traitement thermique.

15. Procédé selon l'une des revendications 1 à 14, **caractérisé en ce qu'**avant et/ou après le traitement thermique, les traitements thermiques individuels ou les étapes de traitement thermique, respectivement, lesdits articles fabriqués (11) étant soumis à des étapes de traitement supplémentaires, et spécifiquement à l'un d'un usinage, d'un soudage ou d'un brasage.
